# EUROPÄISCHE PATENTSCHRIFT

(11) **EP 2 633 381 B1**
(45) Veröffentlichungstag und Bekanntmachung des Hinweises auf die Patenterteilung: **28.11.2018**
(21) Anmeldenummer: 11763866.8
(22) Anmeldetag: 01.09.2011
(51) Int. Cl.: G06F 3/0488, G06F 3/0481, G06F 3/0484, H04H 60/04

(54) **BEDIENVORRICHTUNG ZUR BEDIENUNG MINDESTENS EINES ELEKTRISCHEN GERÄTS**
OPERATING DEVICE FOR OPERATING AT LEAST ONE ELECTRIC DEVICE
DISPOSITIF DE COMMANDE POUR COMMANDER AU MOINS UN APPAREIL ÉLECTRIQUE

(30) Priorität: 29.10.2010 DE 102010043104
(43) Veröffentlichungstag der Anmeldung: 04.09.2013
(73) Patentinhaber: Robert Bosch GmbH, 70442 Stuttgart (DE)
(72) Erfinder: KLEPPER, Martin, 94529 Aicha (DE); KRAUSE, Mathias, 94360 Mitterfels (DE)
(86) Internationale Anmeldenummer: PCT/EP2011/065077
(87) Internationale Veröffentlichungsnummer: WO 2012/055613

(56) Entgegenhaltungen:
- EP-A2- 1 703 652
- DE-A1- 10 050 223
- GB-A- 2 116 796
- US-A1- 2005 276 448
- US-A1- 2007 052 687
- US-A1- 2009 085 880

## Beschreibung

Die Erfindung betrifft eine Bedienvorrichtung zur Bedienung mindestens eines elektrischen Geräts, welches zwei oder mehrere Funktionsparameter aufweist und wobei die Bedienvorrichtung einen Sensorbildschirm und ein mechanisches Bedienelement umfasst.

Bedienvorrichtungen für elektrische Geräte sind für zahlreiche Anwendungen, zum Beispiel für die Bedienung von Geräten in Fahrzeugen oder bei Audioanwendungen bekannt. In den Fahrzeugen sind insbesondere verschiedene Funktionsparameter eines Radiogeräts, einer Klimaanlage und/oder eines Navigationsgeräts durch eine Bedienvorrichtung betätig- und steuerbar. Zu den Funktionsparametern einer Klimaanlage zählen beispielsweise die Temperatur und die Gebläsestärke. Bei den Audioanwendungen können Funktionsparameter, wie zum Beispiel Werte von Höhen, Bässen und Dynamik eines oder mehrerer Instrumente auf sogenannten Mischpulten eingestellt werden.

Die Druckschrift DE 10 2006 000 637 A1 beschreibt eine Anzeigevorrichtung, die eine berührungslose sensitive Oberfläche aufweist. Da die Anzeigevorrichtung sowohl eine kapazitive als auch resistive Auswertbarkeit erlaubt, ist sie dazu ausgebildet, durch Berührung oder Annäherung an Symbole, die auf der Oberfläche angezeigt sind, ein oder mehrere elektrische Geräte zu bedienen.

Das Dokument UK 2116796 A beschreibt eine Dateneingabeanordnung mit einem Drehelement, das manuell über einen vorgegebenen Umfang entlang eines vorgegebenen Weges bewegbar ist, mit einer Vorrichtung zum Erkennen der momentanen Position des Elements und mit einem digitalen Display zur digitalen Anzeige der Position des Elements. Das Drehelement wird zur Auswahl von Parametern verwendet, wobei das Display die Auswahl des entsprechenden Parameters und dessen aktuellen Wert anzeigt. Durch Betätigung von Drucktasten eines Tastenfeldes kann unter den Parameter ausgewählt werden und diese angewählt werden, wobei das Display den Wert, der geladen wird, anzeigt.

In der Druckschrift US 2005/276448 A1 sind Verfahren und eine Vorrichtung offenbart, die eine Rekonfiguration für in Fahrzeugen integrierte Steuerungselemente wie z.B. Knöpfe, Schieberegler und Schalter auf konventionelle Flachbildschirme und Ausleseelektronik ermöglichen.

Die Offenlegungsschrift DE 100 50 223 A1 beschreibt eine Multifunktions-Anzeige- und Bedieneinrichtung zur Integration in ein Fahrzeug. Die Multifunktions-Anzeige umfasst einen Touchscreen, auf dem Softkeys als Eingabeelemente angeordnet sind und mindestens ein weiteres Eingabeelement, das mindestens einem rotatorischen und einen translatorischen Freiheitsgrad aufweist. Durch Betätigung der Softkeys sind Menüpunkte auswählbar. Mittels der rotatorischen Bewegung des weiteren Eingabeelements sind kontinuierliche, mehrstufige oder leistenförmige Einstellungen oder Auswahlen vornehmbar, mittels der translatorischen Bewegung Menüpunkte auswählbar.

In der Druckschrift US 2009/085880 A1 ist eine Steuerungsschnittstelle zur Integration ein einem Fahrzeug beschrieben. Die Steuerungsschnittstelle umfasst ein rechteckiges Display mit vier Quadranten, wobei jeder Quadrant zur Anzeige mindestens einer Funktion der Schnittstelle ausgebildet ist. Das Display weist vier Touchpads auf, die zueinander in den vier Quadraten des Displays angeordnet sind. Mittig im Display sind ein innerer und eine äußerer Drehregler konzentrisch zueinander angeordnet. Der innere Drehregler ist zudem als ein Druckschalter ausgebildet. Die Funktion kann durch über Betätigung des Touchpads angewählt und durch den oder die Drehregler geregelt und eingestellt werden.

Die Druckschrift US 2007/052687 offenbart eine Bedienvorrichtung für ein Audio-Mischpult, die einen Sensorbildschirm und mechanische Bedienelemente zur Einstellung von Parameterwerten aufweist.

In der Druckschrift EP 1 703 652 A2, die wohl den nächstliegenden Stand der Technik bildet, ist ein Audio-Mischpult beschrieben. Auf einem Bedienfeld des Audio-Mischpults ist ein Kanalzug-Abschnitt auf einem Bedienfeld auf Basis einer Gruppe angeordnet, wobei die Gruppe durch entsprechende Klassifizierung eine Vielzahl von Eingangs- und Ausgangskanälen in Gruppen aufweist. Durch die Anwendung von Channel-Strips, die dem Kanalzug-Abschnitt zugeordnet sind, kann eine Parameter-Einstellung für jeden der Kanäle durchgeführt werden. Der Kanalzug-Abschnitt ist zur Verbesserung der Bedienbarkeit in einem mittleren Bereich des Audiomischpults angeordnet. Die jeweiligen Kanäle der Gruppe sind jeweils den entsprechenden Channel-Strips zugeordnet, wobei in einem Gruppen-Auswahl-Modus durch ein Gruppen-Betätigungselement ein Parameter eingestellt werden kann. In dem Gruppen-Auswahl-Modus sind die Gruppen-Betätigungselemente in entsprechender Weise zur Einteilung der Kanalzug-Abschnitte auf dem Bedienfeld angeordnet. Durch eine solche Anordnung wird es möglich, ohne weiteres zu erkennen, welche Gruppe dem Kanalzug-Abschnitt zugewiesen ist.

### Offenbarung der Erfindung

Im Rahmen der Erfindung wird eine Bedienvorrichtung mit den Merkmalen des Anspruchs 1 und ein Mischpult mit den Merkmalen des Anspruchs 3 vorgeschlagen.

Eine bevorzugte Ausführungsform der Erfindung ergibt sich aus dem Anspruch 2.

Im Rahmen der Erfindung wird eine Bedienvorrichtung vorgeschlagen, die zur Bedienung mindestens eines elektrischen Geräts ausgebildet ist. Vorzugsweise sind die Bedienvorrichtung und das mindestens eine elektrische Gerät über elektrische Leitungen oder Funk miteinander verbunden. Insbesondere ist die Bedienvorrichtung in einem Mischpult integriert. Mischpulte sind insbesondere dazu ausgebildet, einzelne Tonsignale zu einem Stereosignal oder einem Mehrkanalsignal zusammenzumischen. Sie werden beispielsweise für die Beschallung von Diskotheken und Konzerthallen, bei der Radio- und Fernsehübertragung und besonders in Film- und Tonstudios eingesetzt.

Das mindestens eine elektrische Gerät umfasst vorzugsweise eine, zwei oder mehrere Tonsignalquellen oder Schnittstellen zur Übernahme von Signalen dieser Tonsignalquellen. Insbesondere ist die Bedienvorrichtung zur Bedienung, beispielsweise zur Zusammenfügung der Tonsignalquellen, wie z. B. elektrischen Klangerzeugern, Musikinstrumenten und/oder Mikrofonen ausgebildet. Das mindestens eine elektrische Gerät weist zwei oder mehrere Funktionsparameter, insbesondere einstellbare Größen und/oder Werte, wie z.B. Höhen, Tiefen, Lautstärke, Dynamik, Frequenzgang, etc. auf.

Die Bedienvorrichtung umfasst einen Sensorbildschirm und ein mechanisches Bedienelement. Gemäß der Erfindung ist der Sensorbildschirm als ein Multi-Sensorbildschirm zur gleichzeitigen Erkennung und Verarbeitung mehrerer Berührungspunkte ausgebildet.

Der Sensorbildschirm ist zur Anzeige von Symbolen, insbesondere Zeichen, Zahlen und/oder Bildern, ausgebildet. Vorzugsweise symbolisieren die Symbole die Funktionsparameter und/oder definieren diese. Die Funktionsparameter weisen insbesondere einen von zwei Zuständen, z.B. ein oder aus auf. Alternativ oder ergänzend weisen die Funktionsparameter einen variablen Wert aus einer Wertemenge auf. Vorzugsweise stellen die Symbole die Funktionsparameter, insbesondere einen Einstellungs- und/oder Regelungsgrad der Funktionsparameter, als Schalter, Taster oder Regler mit einer dem Einstellung- und/oder Regelungsgrad entsprechenden Schalter-, Taster- oder Reglerstellung dar. Denkbar ist ebenfalls, dass ein Symbol ergänzend das mindestens eine elektrische Gerät symbolisiert.

Vorzugsweise ist der Sensorbildschirm als ein berührungslos sensitiver Bildschirm und/oder als ein berührungsempfindlicher Bildschirm (Touchscreen) ausgebildet. Hierzu umfasst der Sensorbildschirm beispielsweise mindestens eine kapazitive Sensoreinrichtung, die dazu ausgebildet ist, eine kontaktlose Annäherung an das mindestens eine angezeigte Symbol zu erfassen. Alternativ oder ergänzend umfasst der Sensorbildschirm mindestens eine resistive Sensoreinrichtung, die dazu ausgebildet ist, eine Berührung des angezeigten Symbols zu erfassen.

Vorzugsweise ist das mechanische Bedienelement als ein mechanischer Regler zur Einstellung und/oder Regelung der Funktionsparameter ausgebildet. Vorstellbar im Rahmen der Erfindung ist, dass der Sensorbildschirm und das mechanische Bedienelement zusammen, beispielsweise benachbart oder nebeneinander, auf dem Mischpult angeordnet sind.

Erfindungsgemäß ist die Bedienvorrichtung dazu ausgebildet, eine Kontrolle, insbesondere eine Einstellung, Regelung und/oder Steuerung, der Funktionsparameter durch eine Anwahl auf dem Sensorbildschirm an das mechanische Bedienelement zuzuweisen. Die Anwahl erfolgt durch die kontaktlose Annäherung und/oder durch die Berührung der Symbole auf dem Sensorbildschirm. Die Bedienvorrichtung ist dazu ausgebildet, die Funktionsparameter zur Einstellung, Steuerung und/oder Regelung dem mechanischen Bedienelement zuzuweisen.

Hierzu umfasst die Bedienvorrichtung vorzugsweise eine Auswerte- und Steuereinheit, wobei die Auswerteeinheit dazu ausgebildet ist, die Anwahl der Symbole, die Zuweisung der Funktionsparameter durch den Sensorbildschirm und deren Einstellung, Steuerung und/oder Regelung durch das Bedienelement auszuwerten. Die Steuereinheit ist insbesondere dazu ausgebildet, das mindestens eine elektrische Gerät entsprechend der Einstellung, Steuerung und/oder Regelung anzusteuern.

Als Vorteile herkömmlicher, aus dem Stand der Technik bekannter Sensorbildschirme sind zu nennen, dass sie dazu ausgebildet sind, einen oder mehrere Funktionsparameter durch ein oder mehrere Symbole virtuell als Schalter-, Taster- und/oder Reglerstellung optisch darzustellen und/oder anzuzeigen. Insbesondere sind die herkömmlichen Sensorbildschirme dazu ausgebildet, die Anzeige flexibel und dynamisch an den/die momentan eingestellten Funktionsparameter des mindestens einen elektrischen Geräts anzupassen. Da in der Regel für die Bedienung des Sensorbildschirms, im Speziellen für die Anwahl der Symbole, keine zusätzliche Eingabeeinrichtung, beispielsweise eine Tastatur oder eine Tastenfeld notwendig ist, kann auf eine separate oder zusätzliche Eingabeeinrichtung verzichtet werden und Bauraum gespart werden. Eine Eingabe von einem der zwei Zustände, wie z. B. ein/aus, kann für den Benutzer meist problemlos, bequem und direkt über den auf dem herkömmlichen Sensorbildschirm dargestellten Schalter oder Taster erfolgen.

Jedoch ist eine exakte Betätigung oder Bedienung der aus dem Stand der Technik bekannten Sensorbildschirme bei einer virtuellen Darstellung und/oder Anzeige eines Reglers in vielen Fällen schwierig, da der Benutzer keinerlei haptische oder mechanische Rückmeldung erfahren kann. Der Einstellungs- und/oder Regelungsgrad des/der Funktionsparameter/s ist für den Benutzer nur in begrenztem Umfang richtig einschätzbar. Um den konkret eingestellten oder geregelten Grad zu erfahren, ist der Benutzer meist gezwungen, während der Einstellung oder Regelung des/der Funktionsparameter/s stetigen Blickkontakt mit der Anzeige des Reglers auf dem herkömmlichen Sensorbildschirm zu haben. Eine direkte, präzise und gleichzeitig schnelle Einstellung, Steuerung und/oder Regelung des/der Funktionsparameter/s, insbesondere ohne stetigen Blickkontakt mit dem aus dem Stand der Technik bekannten Sensorbildschirm, gestaltet sich zumeist als nicht praktikabel.

Dagegen bieten herkömmliche, aus dem Stand der Technik bekannte mechanische Bedienelemente den Vorteil, dass der Benutzer bei deren Handhabung ein haptisches bzw. mechanisches Feedback erhält und dieses im Hinblick auf die vorgenommene Einstellung und/oder Regelung des/r Funktionsparameter/s intuitiv und richtig einschätzen kann. Beispielsweise weiß der geübte Benutzer zumeist, dass er durch die Anwendung einer geringen Kraft eine langsam verlaufende Werteänderung des/r Funktionsparameter/s erzielt. Dagegen resultiert vorzugsweise eine große und/oder schnelle Werteänderung bei der Anwendung einer größeren Kraft.

Die Erfindung verbindet die große Variabilität, Dynamik und Flexibilität der herkömmlichen, aus dem Stand der Technik bekannten Sensorbildschirme mit den Vorteilen der herkömmlichen, aus dem Stand der Technik bekannten mechanischen Bedienelemente, indem dem mechanischen Bedienelement erfindungsgemäß verschiedene, auf dem Sensorbildschirm angezeigte Funktionsparameter zur Kontrolle zugewiesen werden können.

Der Benutzer ist in vorteilhafter Weise in der Lage, durch das haptische bzw. mechanische Feedback des erfindungsgemäßen mechanischen Bedienelements, die Funktionsparameter schnell und präzise einzustellen und/oder zu regeln. Insbesondere bei zeitkritischen Anwendungen, bei denen eine Verzögerung bei der Funktionsparameterregelung nicht zulässig ist, ist eine Kombination aus der großen Flexibilität des Sensorbildschirms und dem haptischen Feedback des mechanischen Bedienelements von Vorteil.

Von Vorteil ist ebenfalls, dass der Benutzer bei der Einstellung, Steuerung und/oder Regelung der Funktionsparameter aufgrund der haptischen bzw. mechanischen Rückmeldung keinerlei Blickkontakt mit dem mechanischen Bedienelement und/oder dem erfindungsgemäßen Sensorbildschirm benötigt. Dadurch kann in vorteilhafter Weise eine zeitgleiche Beobachtung anderer Vorgänge ermöglicht werden.

Vorzugsweise kann der Benutzer eine schnelle, intuitive Anwahl und Zuweisung der Funktionsparameter auf dem erfindungsgemäßen Sensorbildschirm vornehmen und durch Bedienung des erfindungsgemäßen mechanischen Bedienelements die haptische bzw. mechanische Rückmeldung erhalten.

Gemäß der Erfindung ist der Sensorbildschirm dazu ausgebildet, die Funktionsparameter, insbesondere deren Einstellungs- und/oder Regelungsgrad, durch Symbole anzuzeigen. Vorzugsweise sind auf dem Sensorbildschirm ein oder mehrere virtuell dargestellte Regler, insbesondere Dreh- oder Schieberegler, in Reglerstellungen abgebildet, die die Funktionsparameter anzeigen. Vorstellbar ist im Rahmen der Erfindung, dass der virtuell dargestellte Regler eine Werteskala aufweist oder dieser zugeordnet ist, um den Einstellungs- und/oder Regelungsgrad der Funktionsparameter anzuzeigen.

Erfindungsgemäß ist das Symbol / sind die Symbole durch eine kontaktlose Annäherung an das Symbol / die Symbole oder durch eine Berührung des Symbols / der Symbole anwählbar. Beispielsweise kann der Benutzer das Symbol / die Symbole mit der ersten Hand anwählen und die Funktionsparameter dem mechanischen Bedienelement zur Einstellung, Steuerung und/oder Regelung zuweisen. Vorzugsweise kann der Benutzer durch die Betätigung des mechanischen Bedienelements den Einstellungs- und/oder Regelungsgrad der angewählten Funktionsparameter einstellen und/oder regeln.

Die Erfindung sieht vor, dass die Bedienvorrichtung durch die Anwahl mehrerer oder aller Symbole zur zeitgleichen und/oder gemeinsamen Zuweisung mehrerer der oder aller Funktionsparameter an das mechanische Bedienelement ausgebildet ist. Beispielsweise legt der Benutzer zur Anwahl gleichzeitig zwei Finger einer ersten Hand auf zwei der Symbole, um die gewünschten Funktionsparameter anzuwählen und diese dem mechanischen Bedienelement gemeinsam und/oder zeitgleich zuzuweisen. Vorstellbar im Rahmen der Erfindung ist ebenfalls, dass der Benutzer drei, vier oder fünf Symbole gemeinsam und/oder gleichzeitig anwählt und die gewünschten Funktionsparameter zuweist. Somit werden die drei, vier oder fünf durch die Symbole angezeigten Funktionsparameter gemeinsam und/oder zeitgleich dem mechanischen Bedienelement zugewiesen.

Im Rahmen der Erfindung ist die Zuweisung der Kontrolle über die Funktionsparametei an das mechanische Bedienelement nur während der Anwahl des Symbols / der Symbole aktiv. Optional ergänzend ist die Zuweisung der Kontrolle über die Funktionsparameter an das mechanische Bedienelement nur zeitgleich mit der Anwahl des Symbols / der Symbole aktiv.

Alternativ zur Erfindung ist es auch möglich, dass die Zuweisung der Kontrolle über den/die Funktionsparameter an das mechanische Bedienelement nach der Anwahl des Symbols / der Symbole daueraktiviert ist.

In der erfindungsgemäßen Ausbildungsform ist die Bedienvorrichtung zu einer beidhändigen Bedienung ausgebildet, wobei eine erste Hand eines Bedieners den Sensorbildschirm und eine zweite Hand des Bedieners das mechanische Bedienelement bedient. Hierbei wählt der Benutzer die Symbole mit der ersten Hand an und weist die Funktionsparameter dem mechanischen Bedienelement zu. Insbesondere bedient der Benutzer mit der zweiten Hand das mechanische Bedienelement und nimmt daran die Einstellung, Steuerung und/oder Regelung der zugewiesenen Funktionsparameter vor.

Bei der erfindungsgemäßen Ausführungsform ist es vorgesehen, dass der Sensorbildschirm und das mechanische Bedienelement nebeneinander, insbesondere auf einer gleichen relativen Höhe auf der Bedienvorrichtung, insbesondere dem Mischpult angeordnet sind, um eine bequeme und ergonomische Bedienung durch den Benutzer zu gewährleisten. So ist der Sensorbildschirm vorzugsweise auf der Seite der Bedienvorrichtung, auf der auch die erste Hand des Benutzers angeordnet ist, wenn sich dieser vor der Bedienvorrichtung, insbesondere dem Mischpult befindet. Beispielsweise ist der Sensorbildschirm auf einer linken Seite der Bedienvorrichtung, insbesondere des Mischpults angeordnet und dazu ausgebildet, von einer linken Hand des Benutzers bedient zu werden. Das mechanische Bedienelement ist insbesondere auf einer rechten Seite der Bedienvorrichtung, insbesondere des Mischpults zur Bedienung mit der rechten Hand des Benutzers angeordnet. Vorstellbar ist auch eine vertauschte Anordnung des Sensorbildschirms und des mechanischen Bedienelements auf der Bedienvorrichtung, wobei das mechanische Bedienelement auf der linken Seite und der Sensorbildschirm auf der rechten Seite angeordnet sein können. Diese Anordnung kann insbesondere für Linkshänder vorteilhaft sein.

In der erfindungsgemäßen Ausgestaltung die Bedienvorrichtung dazu ausgebildet ist, die Zuweisung der Funktionsparameter auf dem Sensorbildschirm mit der ersten Hand und die Einstellung, Steuerung und/oder Regelung des Funktionsparameter an der mechanischen Bedieneinrichtung mit der zweiten Hand zeitgleich vorzunehmen. Wie bereits erklärt, ist der Sensorbildschirm vorzugsweise dazu ausgebildet, ein, zwei, mehrere oder alle Symbole durch die Annäherung der ersten Hand des Benutzers und/oder durch die Berührung durch die erste Hand des Benutzers anzuwählen und die Kontrolle über den/die Funktionsparameter dem mechanischen Bedienelement zuzuweisen. Insbesondere ist die mechanische Bedieneinrichtung dazu ausgebildet, die Funktionsparameter während deren Zuweisung durch eine Bedienung durch den Benutzer mit der zweiten Hand einzustellen, zu steuern und/oder zu regeln.

In einer zur Erfindung alternativen Ausführungsform ist die Bedienvorrichtung dazu ausgebildet, zunächst die Anwahl des Symbols / der Symbole und die Zuweisung des/der Funktionsparameter/s auf dem Sensorbildschirm vorzunehmen und danach die Einstellung des/r Funktionsparameter/s mit der mechanischen Bedieneinrichtung zu tätigen. Insbesondere erfolgt bei dieser Art von Bedienung keine zeitgleiche Zuweisung und Einstellung, Steuerung und/oder Regelung des/der Funktionsparameter/s.

Eine weitere mögliche erfindungsgemäße Ausgestaltung sieht vor, dass das mechanische Bedienelement als mechanischer Regler, insbesondere als Dreh- oder Schieberegler, zur Einstellung, Steuerung und/oder Regelung der Funktionsparameter ausgebildet ist. Vorzugsweise ist der Drehregler dazu ausgebildet, den Einstellungs- und/oder Regelungsgrad durch eine Drehung in eine erste Richtung zu erhöhen und in eine zweite, der ersten Richtung entgegengesetzten Richtung, zu verringern. Insbesondere ist der Schieberegler dazu ausgebildet, den Einstellungs- und/oder Regelungsgrad durch ein Verschieben in eine erste Richtung zu erhöhen und in eine zweite, der ersten Richtung entgegengesetzten Richtung, zu verringern.

Ein weiterer Gegenstand der Erfindung betrifft ein Mischpult für Audioanwendungen nach Anspruch 3. Vorzugsweise ist das Mischpult dazu ausgebildet, einzelne Tonsignale zu einem Mehrkanalsignal, insbesondere Stereosignal zusammenzumischen. Insbesondere ist das Mischpult dazu ausgebildet, bei der Beschallung von Diskotheken und Konzerthallen verwendet zu werden. Im Speziellen ist das Mischpult für den Einsatz bei Radio- und/oder Fernsehübertragungen und/oder in Film- und/oder Tonstudios ausgebildet.

Vorzugsweise ist die Bedienvorrichtung zur Durchführung des nachfolgenden Verfahrens ausgebildet:
Ein Verfahren zur Bedienung der Bedienvorrichtung umfasst vorzugsweise folgende Schritte:
- Anwahl eines, mehrerer oder aller Symbole auf dem Sensorbildschirm und Zuweisung der Funktionsparameter an die mechanische Bedieneinrichtung
- Einstellung, Steuerung und/oder Regelung des Funktionsparameter mit der mechanischen Bedieneinrichtung

Beispielsweise wählt der Benutzer zunächst das Symbol / die Symbole auf dem Sensorbildschirm an und weist die Funktionsparameter dem mechanischen Bedienelement zu, wobei die Anwahl und Zuweisung vorzugsweise durch eine einmalige, kurzzeitige Annäherung und/oder Berührung des Symbols / der Symbole erfolgt. Vorzugsweise wählt der Benutzer das Symbol / die Symbole auf dem Sensorbildschirm an, indem er seine erste oder zweite Hand annähert oder das Symbol / die Symbole berührt. Insbesondere entfernt er kurz darauf die erste oder zweite Hand wieder vom Sensorbildschirm, wobei die Anwahl und Zuweisung der Funktionsparameter daueraktiv bleibt. Im Speziellen muss der Benutzer die Hand bzw. der/die Finger während der Einstellung, Steuerung und/oder Regelung der Funktionsparameter nicht über oder auf dem Symbol / den Symbolen halten, sondern kann die Funktionsparameter einstellen, steuern und/oder regeln, auch wenn er die erste Hand bereits vom Sensorbildschirm entfernt hat. Denkbar ist, dass der Benutzer zur Anwahl des Symbols / der Symbole, zur Zuweisung und Einstellung, Steuerung und/oder Regelung der Funktionsparameter nur die erste oder nur die zweite Hand benutzt. Vorzugsweise nähert der Benutzer die erste oder zweite Hand erneut kurzzeitig an das Symbol / die Symbole an oder berührt diese/s, wenn er die Einstellung, Steuerung und/oder Regelung beendet hat. Insbesondere deaktiviert der Benutzer durch die erneute, kurzzeitige Berührung und/oder Annäherung die Anwahl des Symbols / der Symbole und die Zuweisung der Kontrolle der Funktionsparameter an das mechanische Bedienelement.

Besonders bevorzugt ist, dass der Benutzer seine Hand an das Symbol / die Symbole annähert und/oder diese/s berührt, wodurch er dem mechanischen Bedienelement die Kontrolle über die Funktionsparameter während der Annäherung und/oder Berührung zuweist. Vorzugsweise nähert der Benutzer die erste Hand an das Symbol / die Symbole an und/oder berührt diese/s, wobei er die erste Hand über oder auf dem Symbol / den Symbolen behält und währenddessen mit der zweiten Hand die Funktionsparameter am mechanischen Bedienelement einstellt, steuert und/oder regelt. Insbesondere behält er die erste Hand solange auf oder über dem Symbol / den Symbolen, wie er dem mechanischen Bedienelement die Kontrolle über die Funktionsparameter zuweist. Vorzugsweise stellt der Benutzer die Funktionsparameter mit der zweiten Hand an dem mechanischen Bedienelement ein und/oder regelt diese/n, während er mit der ersten Hand das Symbol / die Symbole anwählt. Vorzugsweise entfernt der Benutzer die erste Hand erst nach Abschluss der Einstellung, Steuerung und/oder Regelung der Funktionsparameter vom angewählten Symbol / von den angewählten Symbolen und beendet damit die Zuweisung der Kontrolle über den/die Funktionsparameter an das mechanische Bedienelement. Insbesondere bewegt der Benutzer die erste Hand erst dann vom Sensorbildschirm weg und deaktiviert die Zuweisung an das mechanische Bedienelement, wenn er die Funktionsparameter eingestellt, gesteuert und/oder geregelt hat. Vorzugsweise bedient der Benutzer die Bedienvorrichtung beidhändig, wobei die erste Hand den Sensorbildschirm und die zweite Hand das mechanische Bedienelement bedient. Besonders bevorzugt ist, dass der Benutzer zwei oder mehrere Symbole gemeinsam und/oder gleichzeitig anwählt und zwei oder mehrere Funktionsparameter dem mechanischen Bedienelement gemeinsam und/oder gleichzeitig zuweist. Insbesondere stellt der Benutzer die zwei oder mehreren Funktionsparameter am mechanischen Bedienelement gemeinsam und/oder zeitgleich ein und/oder regelt sie. Die Einstellung, Steuerung und/oder Regelung des Einstellungs- und/oder Regelungsgrads der Funktionsparameter erfolgt dabei relativ zum bisherigen Wert.

Weitere Merkmale, Vorteile und Wirkungen der Erfindung ergeben sich aus der nachfolgenden Beschreibung bevorzugter Ausführungsbeispiele der Erfindung sowie der zugehörigen Figuren. Dabei zeigen:
- Figur 1: eine Draufsicht auf eine Bedienvorrichtung;
- Figur 2: eine Draufsicht auf eine Alternative zur Bedienvorrichtung aus Fig. 1;
- Figur 3: eine Draufsicht auf eine Abwandlung der Bedienvorrichtung aus Fig. 1;
- Figur 4: eine Draufsicht auf eine Alternative zur Bedienvorrichtung aus Fig. 3;
- Figur 5: ein Ablaufdiagramm zur Bedienung der Bedienvorrichtung.

Einander entsprechende oder gleiche Teile sind in den Figuren jeweils mit den gleichen Bezugszeichen versehen.

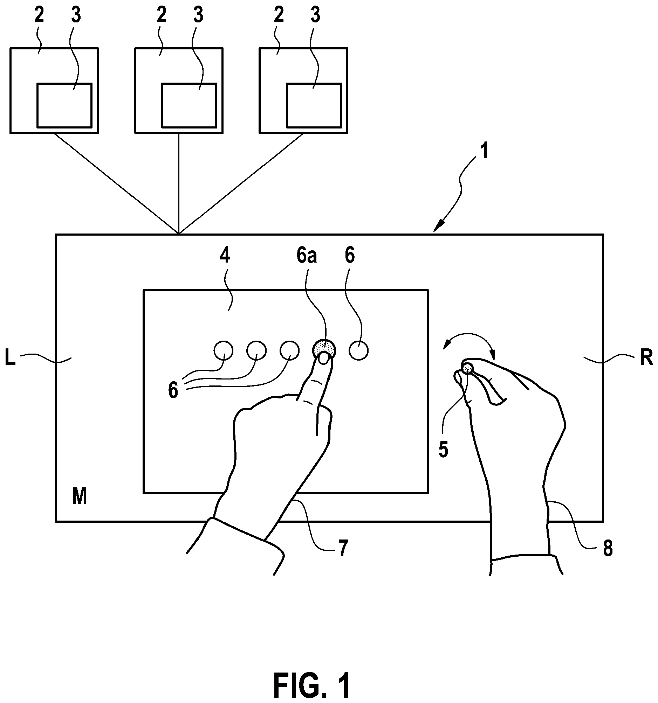

Figur 1 zeigt eine Draufsicht auf eine Bedienvorrichtung 1 zur Bedienung von drei elektrischen Geräten 2 als ein Ausführungsbeispiel der Erfindung. Die Bedienvorrichtung 1 ist in einem Mischpult M integriert und über elektrische Leitungen mit den elektrischen Geräten 2 verbunden. Die elektrischen Geräte 2 sind als Tonsignalquellen 2, insbesondere als elektrische Klangerzeuger, Musikinstrumente und/oder Mikrofone ausgebildet.

Die Tonsignalquellen 2 weisen fünf einstellbare und/oder regelbare Funktionsparameter 3 auf. Die Funktionsparameter 3 umfassen einstellbare Größen und/oder Werte, wie Lautstärke, Höhen, Tiefen, Frequenzgang und Dynamik der Tonsignalquellen 2.

Die Bedienvorrichtung 1 weist einen Sensorbildschirm 4 und ein mechanisches Bedienelement 5 auf. Der Sensorbildschirm 4 und das mechanische Bedienelement 5 sind nebeneinander auf der Bedieneinrichtung, insbesondere dem Mischpult 1 angeordnet. Der Sensorbildschirm 4 ist in der Draufsicht auf die Bedienvorrichtung 1 auf einer linken Seite L und das mechanische Bedienelement 5 auf einer rechten Seite R der Bedienvorrichtung 1, insbesondere des Mischpults M angeordnet.

Der Sensorbildschirm 4 ist als ein berührungsempfindlicher Bildschirm (Touchscreen) 4 ausgebildet und weist er eine resistive Sensoreinrichtung auf. Der Sensorbildschirm 4 ist zur Anzeige von Symbolen 6 ausgebildet, wobei in Fig. 1 fünf Symbole 6 angezeigt sind. Die fünf Symbole 6 symbolisieren die fünf Funktionsparameter 3 der Tonsignalquellen 2.

Die resitistive Sensoreinrichtung ist den Symbolen 6 zugeordnet, insbesondere unterhalb der Symbole 6 in einem Inneren des Sensorbildschirms 4 angeordnet. Das mechanische Bedienelement 5 ist als ein mechanischer Drehregler 5 ausgebildet. Eine linke Hand 7 eines Benutzers bedient den Sensorbildschirm 4, eine rechte Hand 8 den Drehregler 5.

Die Bedienvorrichtung 1 ist dazu ausgebildet, die elektrischen Geräte 2 zu bedienen, insbesondere hinsichtlich der Funktionsparameter 3 abzustimmen und/oder zusammenzuführen.

Der Sensorbildschirm 4, insbesondere die resisitive Sensoreinrichtung, ist dazu ausgebildet, eine Berührung durch die linke Hand 7 des Benutzers zu erfassen.

Im Folgenden ist anhand Figur 1 eine zur Erfindung Alternative Ansteuerung beschrieben. Der Benutzer legt hierzu kurzzeitig einen Finger seiner Hand, in Fig. 1 der linken Hand 7, auf eines der Symbole 6a und wählt dieses an. Nach der Anwahl kann der Benutzer den Finger wieder vom Symbol 6a entfernen, wobei die Anwahl bestehen bleibt.

Mit der Anwahl des Symbols 6a weist der Benutzer dem Drehregler die Kontrolle über den Funktionsparameter 3, der durch das Symbol 6a symbolisiert ist, 5 zur Einstellung, Steuerung und/oder Regelung zu. Das angewählte Symbol 6a weist eine andere Farbe als die übrigen, nicht angewählten Symbole 6 auf. Somit wird dem Benutzer die Zuweisung des Funktionsparameters 3 an den Drehregler 5 angezeigt.

Durch ein erneutes Auflegen des Fingers auf das angewählte Symbol 6a wird dieses wieder deaktiviert und die Zuweisung des Funktionsparameters 3 an den Drehregler 5 beendet. Das Symbol 6a weist nach der Deaktivierung wieder die Farbe der übrigen Symbole 6 auf, um den Benutzer die Deaktivierung und Beendigung der Zuweisung anzuzeigen.

Der Drehregler 5 ist dazu ausgebildet, den dem Drehregler 5 zugewiesenen Funktionsparameter 3 einzustellen, zu steuern und/oder zu regeln. Da der Benutzer nach der Anwahl des Symbols und der Zuweisung des Funktionsparameters 3 an den Drehregler 5 die linke Hand 7 wieder zur Verfügung hat, kann er den Drehregler 5 optional mit der linken Hand 7 oder mit der rechten Hand 8 bedienen. In Fig. 1 ist die Bedienung des Drehreglers 5 mit der rechten Hand 8 dargestellt.

Bei einer Rechtsdrehung des Drehreglers 5 erhöht der Benutzer einen Einstellungs- und/oder Regelungsgrad des Funktionsparameters 3, bei einer Linksdrehung verringert er diesen. Durch die mechanische Rechts- oder Linksdrehung erhält der Benutzer eine haptische Rückmeldung, durch die er den Drehregler 5 schnell und ohne Blickkontakt zum Drehregler 5 betätigen und den Funktionsparameter 3 präzise einstellen, steuern und/oder regeln kann.

Die Bedienvorrichtung 1 umfasst eine Auswerte- und Steuereinrichtung, wobei die Auswerteeinrichtung dazu ausgebildet ist, die durch die Sensoreinrichtung erfasste Berührung und die Links- oder Rechtsdrehung des Drehreglers 5 auszuwerten. Die Steuereinrichtung ist dazu ausgebildet, die Anwahl bzw. Deaktivierung des Symbols 6a durch eine Farbänderung anzuzeigen und die Zuweisung des Funktionsparameters 3 an den Drehregler 5 zu steuern. Desweiteren ist die Steuereinrichtung dazu ausgebildet, den Funktionsparameter 3, insbesondere dessen Einstellungs- und Regelungsgrad, gemäß der am Drehregler 5 erfolgten Links- oder Rechtsdrehung zu steuern.

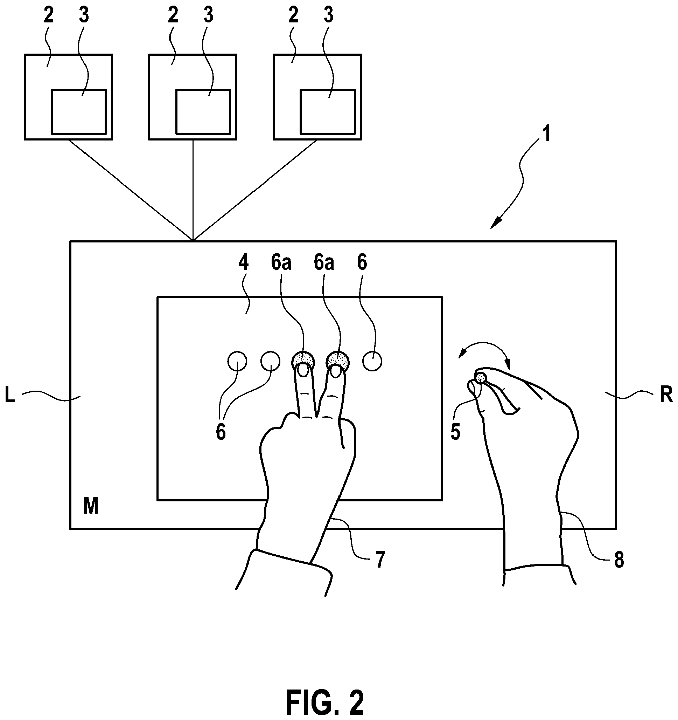

Figur 2 zeigt eine Alternative zur Bedienvorrichtung aus Fig. 1. Die Bedienvorrichtung 1 weist den Sensorbildschirm 4 und den mechanischen Drehregler 5 auf. Die Bedienvorrichtung 1 ist zu einer beidhändigen Bedienung durch den Benutzer ausgebildet, da zur Anwahl der Symbole 6a und zur Zuweisung der Kontrolle über den Funktionsparameter 3 eine gleichzeitige und dauerhafte Berührung der Symbole 6a erforderlich ist. Die Zuweisung der Kontrolle über den Funktionsparameter 3 an den Drehregler 5 ist nur solange aktiv, wie die Finger der linken Hand 7 die Symbole 6a berühren. Nimmt der Benutzer die Finger von den Symbolen 6a weg, so ist die Anwahl der Symbole 6a und die Zuweisung der Funktionsparameter 3 an den Drehregler 5 beendet.

Der Benutzer legt zeitgleich zwei Finger der linken Hand 7 auf die Symbole 6a, die die einzustellenden und/oder zu regelnden Funktionsparameter 3 symbolisieren. Durch die Berührung der Symbole 6a werden diese angewählt. Dadurch weisen sie eine andere Farbe als die nicht angewählten Symbole 6 auf.

Während der Berührung der Symbole 6a ist die Bedienvorrichtung 1 dazu ausgebildet, die Funktionsparameter 3 zeitgleich dem Drehregler 5 zuzuweisen. Währenddessen der Benutzer mit der linken Hand 7 die Symbole 6a anwählt, bedient er den Drehregler mit der rechten Hand 8, indem er die Rechts- oder Linksdrehung ausführt und damit die Funktionsparameter 3, insbesondere deren Einstellungs- und Regelungsgrad, einstellt, steuert und/oder regelt.

In einem alternativen Ausführungsbeispiel sind der Sensorbildschirm 4 und der Drehregler 5 seitenverkehrt zur gezeigten Anordnung angeordnet, wobei der Drehregler 5 auf der linken Seite L der Bedienvorrichtung 1, insbesondere des Mischpults M und der Sensorbildschirm 4 auf der rechten Seite R der Bedienvorrichtung 1, insbesondere des Mischpults M angeordnet sind. Dementsprechend bedient die linke Hand 7 den Drehregler 5 und die rechte Hand 8 den Sensorbildschirm 4. Diese Anordnung ist insbesondere für Linkshänder geeignet.

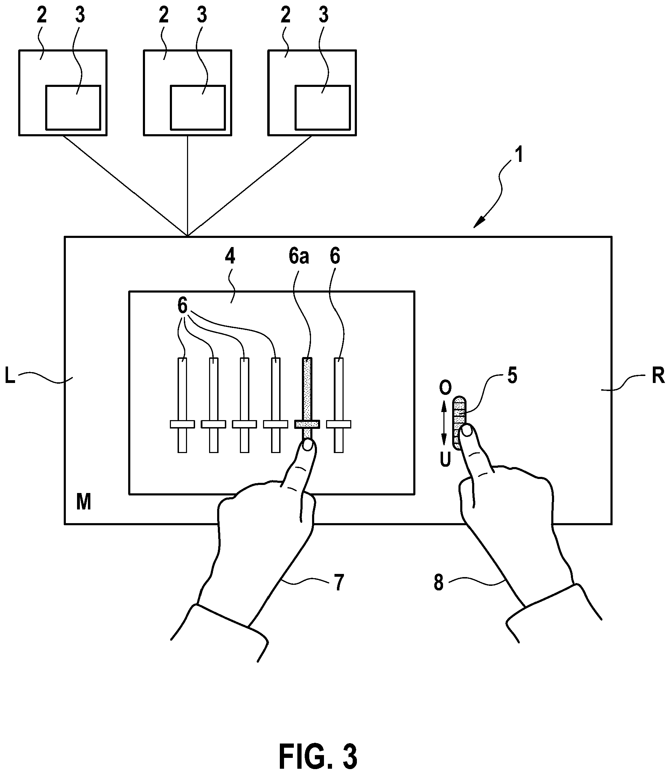

In Figur 3 ist eine Abwandlung der Bedienvorrichtung 1 aus Fig. 1 dargestellt. Die Bedienvorrichtung 1 ist zur Bedienung der drei Tonsignalquellen 2 ausgebildet. Die Tonsignalquellen 2 weisen sechs Funktionsparameter 3 auf. Die Funktionsparameter 3 umfassen die einstellbaren Werte, wie die Lautstärke, die Höhen, die Tiefen, die Dynamik, den Frequenzgang und eine Fadereinstellung.

Der Sensorbildschirm 4 ist als ein annäherungsempfindlicher Bildschirm ausgebildet, der durch eine berührungslose Annäherung an den Bildschirm bedienbar ist. Der Sensorbildschirm 4 weist eine kapazitive Sensoreinrichtung auf, die dazu ausgebildet ist, die berührungslose Annäherung an den Sensorbildschirm 4 zu erfassen.

Auf dem Sensorbildschirm 4 sind sechs Symbole 6 angezeigt, die die sechs Funktionsparameter 3 der Tonsignalquellen 2 symbolisieren. Die Symbole 6 sind als virtuell dargestellte Schieberegler 6 ausgebildet. Sie sind dazu ausgebildet, den Einstellungs- und Regelungsgrad der Funktionsparameter 3 durch eine sich verändernde virtuelle Darstellung anzuzeigen. Bei Erhöhung bzw. Verstärkung des Einstellungs- und Regelungsgrads verschiebt sich der virtuell dargestellte Schieberegler 6a nach oben o. Bei Verringerung des Einstellungs- und Regelungsgrads verschiebt er sich nach unten u.

Das mechanische Bedienelement 5 ist als ein mechanischer Schieberegler 5 ausgebildet. Bei einer Verschiebung des Schiebereglers 5 noch oben o wird der Einstellungs- und Regelungsgrad des Funktionsparameters 3 erhöht bzw. verstärkt, bei einer Verschiebung nach unten u wird dieser verringert.

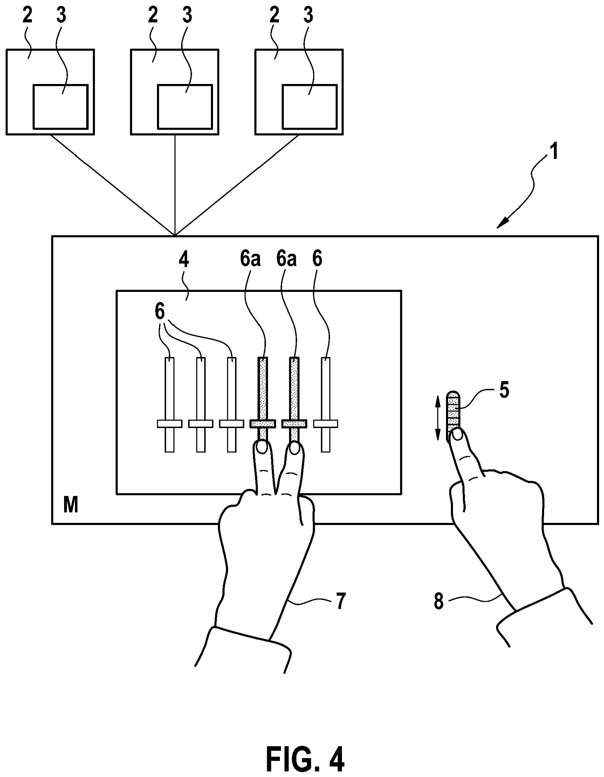

Figur 4 zeigt eine Alternative zur Bedienvorrichtung aus Fig. 3. Die Bedienvorrichtung 1 ist zu einer beidhändigen Bedienung durch den Benutzer ausgebildet. Der Benutzer nähert zwei Finger der linken Hand 7 gleichzeitig und dauerhaft an zwei Symbole 6a an, die die einzustellenden und/oder zu regelnden Funktionsparameter 3 symbolisieren. Solange der Benutzer die Finger über den Symbolen 6a hält, sind diese angewählt und die gewünschten Funktionsparameter 3 dem mechanischen Schieberegler 5 zugewiesen. Die Zuweisung der Kontrolle über die Funktionsparameter 3 ist hier nur während der Anwahl der Symbole 6a aktiv.

Der Schieberegler 5 ist dazu ausgebildet, durch die Verschiebung nach oben oder unten die Funktionsparameter 3 gemeinsam und zeitgleich einzustellen und/oder zu regeln. Der Benutzer bedient den Schieberegler 5 mit der rechten Hand 8, während er die Anwahl der Symbole 6a und die Zuweisung der Funktionsparameter 3 mit der linken Hand 7 auf dem Sensorbildschirm 4 durchgängig hält. Sobald der Benutzer die linke Hand 7 wieder vom Sensorbildschirm 4 entfernt, ist die Anwahl der Symbole 6a und die Zuweisung der Funktionsparameter 3 beendet.

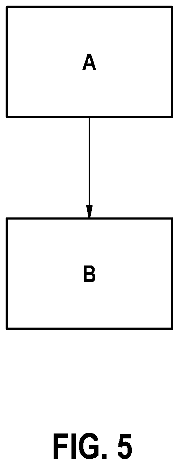

Figur 5 zeigt ein Ablaufschema für ein Verfahren zur Bedienung der Bedienvorrichtung 1. Das Verfahren umfasst folgende Schritte:
- Ein, mehrere oder alle Symbole 6 werden auf dem Sensorbildschirm 4 angewählt und ein, mehrere oder alle Funktionsparameter 3 an die mechanische Bedieneinrichtung 5 zugewiesen (A). Der Benutzer nähert die linke oder rechte Hand 7; 8 an den/die durch das Symbol / die Symbole 6 symbolisierten Funktionsparameter 3 an und/oder berührt diesen/diese, wodurch er den/die Funktionsparameter 3 dem mechanischen Bedienelement 5 zuweist.
- Der/die Funktionsparameter 3 werden mit dem mechanischen Bedienelement 5 eingestellt und/oder geregelt (B). Durch eine Dreh- oder Schiebebewegung wird/werden der/die Funktionsparameter 3, insbesondere deren Einstellungs- und/oder Regelungsgrad, eingestellt und/oder geregelt.

## Patentansprüche

1. Bedienvorrichtung (1) zur Bedienung mindestens eines elektrischen Geräts (2), welches zwei oder mehrere Funktionsparameter (3) aufweist,
wobei die Bedienvorrichtung (1) einen Sensorbildschirm (4) und ein mechanisches Bedienelement (5) umfasst,
wobei die Bedienvorrichtung (1) dazu ausgebildet ist, eine Kontrolle über die Funktionsparameter (3) durch eine Anwahl auf dem Sensorbildschirm (4) an das mechanische Bedienelement (5) zuzuweisen,
wobei der Sensorbildschirm (4) dazu ausgebildet ist, die Funktionsparameter (3) durch Symbole (6) anzuzeigen,
wobei die Bedienvorrichtung (1) durch die Anwahl mehrerer der oder aller Symbole (6) zur zeitgleichen Zuweisung mehrerer der oder aller Funktionsparameter (3) an das mechanische Bedienelement (5) ausgebildet ist,
wobei die Symbole (6) durch eine kontaktlose Annäherung an die Symbole (6) oder durch eine Berührung der Symbole (6) anwählbar sind,
**dadurch gekennzeichnet, dass** der Sensorbildschirm (4) und das mechanische Bedienelement (5) nebeneinander auf der Bedienvorrichtung (1) angeordnet sind, wobei der Sensorbildschirm (4) auf der Seite der Bedienvorrichtung (1) angeordnet ist, auf der auch die erste Hand des Bedieners angeordnet ist und wobei das mechanische Bedienelement (5) auf der Seite der Bedienvorrichtung angeordnet ist, auf der die zweite Hand des Bedieners angeordnet ist, wenn sich dieser vor der Bedienvorrichtung (1) befindet,
wobei die Bedienvorrichtung (1) zu einer beidhändigen Bedienung ausgebildet ist, wobei eine erste Hand (7) eines Bedieners den Sensorbildschirm (4) und eine zweite Hand (8) des Bedieners das mechanische Bedienelement (5) bedient,
wobei die Bedienvorrichtung (1) dazu ausgebildet ist, die Zuweisung der Funktionsparameter (3) auf dem Sensorbildschirm (4) mit der ersten Hand und die Einstellung, Steuerung und/oder Regelung der Funktionsparameter (3) an dem mechanischen Bedienelement (5) mit der zweiten Hand zeitgleich vorzunehmen,
und wobei die Zuweisung der Kontrolle über die Funktionsparameter (3) an das mechanische Bedienelement (5) nur während der Anwahl der Symbole (6a) aktiv ist.

2. Bedienvorrichtung (1) nach dem vorhergehenden Anspruch, **dadurch gekennzeichnet, dass** das mechanische Bedienelement (5) als mechanischer Regler, insbesondere als Dreh- oder Schieberegler, zur Einstellung, Steuerung und/oder Regelung der Funktionsparameter (3) ausgebildet ist.

3. Mischpult (M) für Audioanwendungen mit der Bedienvorrichtung (1) nach einem der vorhergehenden Ansprüche.

## Claims

1. Operator control apparatus (1) for operator control of at least one electrical device (2), which has two or more functional parameters (3), wherein the operator control apparatus (1) comprises a sensor screen (4) and a mechanical operator control element (5),
wherein the operator control apparatus (1) is designed to assign control over the functional parameters (3) to the mechanical operator control element (5) by way of a selection on the sensor screen (4),
wherein the sensor screen (4) is designed to display the functional parameters (3) by way of symbols (6),
wherein the operator control apparatus (1) is designed to simultaneously assign a plurality of or all of the functional parameters (3) to the mechanical operator control element (5) by way of the selection of a plurality of or all of the symbols (6),
wherein the symbols (6) can be selected by way of approaching the symbols (6) in a contactless manner or by way of touching the symbols (6),
**characterized in that** the sensor screen (4) and the mechanical operator control element (5) are arranged next to one another on the operator control apparatus (1), wherein the sensor screen (4) is arranged on the side of the operator control apparatus (1) on which the first hand of the operator is also arranged and wherein the mechanical operator control element (5) is arranged on the side of the operator control apparatus on which the second hand of the operator is arranged when said operator is located in front of the operator control apparatus (1),
wherein the operator control apparatus (1) is designed for operator control with two hands, wherein a first hand (7) of an operator operates the sensor screen (4) and a second hand (8) of the operator operates the mechanical operator control element (5),
wherein the operator control apparatus (1) is designed to perform the assignment of the functional parameters (3) on the sensor screen (4) using the first hand and simultaneously to perform the adjustment, control and/or regulation of the functional parameters (3) on the mechanical operator control element (5) using the second hand,
and wherein the assignment of the control over the functional parameters (3) to the mechanical operator control element (5) is active only during the selection of the symbols (6a).

2. Operator control apparatus (1) according to the preceding claim, **characterized in that** the mechanical operator control element (5) is designed as a mechanical controller, in particular as a rotary or slide controller, for adjusting, controlling and/or regulating the functional parameters (3).

3. Mixer consoler (M) for audio applications having the operator control apparatus (1) according to either of the preceding claims.

## Revendications

1. Dispositif de commande (1) destiné à commander au moins un appareil électrique (2) qui présente deux paramètres de fonction (3) ou plus,
dans lequel le dispositif de commande (1) comprend un écran tactile (4) et un élément de commande mécanique (5),
dans lequel le dispositif de commande (1) est conçu pour affecter un contrôle des paramètres de fonctionnement (3) à l'élément de commande mécanique (5) par sélection sur l'écran tactile (4),
dans lequel l'écran tactile (4) est conçu pour afficher les paramètres de fonction (3) par des symboles (6),
dans lequel le dispositif de commande (1) est réalisé en sélectionnant une pluralité ou la totalité des symboles (6) pour affecter simultanément une pluralité ou la totalité des paramètres de fonction (3) à l'élément de commande mécanique (5),
dans lequel les symboles (6) peuvent être sélectionnés en s'approchant sans contact des symboles (6) ou en touchant les symboles (6),
**caractérisé en ce que** l'écran tactile (4) et l'élément de commande mécanique (5) sont disposés côte à côte sur le dispositif de commande (1), dans lequel l'écran tactile (4) est disposé sur le côté du dispositif de commande (1) sur lequel la première main de l'opérateur est également disposée, et dans lequel l'élément de commande mécanique (5) est disposé sur le côté du dispositif de commande sur lequel est disposée la seconde main de l'opérateur lorsque cette dernière est située devant le dispositif de commande (1),
dans lequel le dispositif de commande (1) est conçu pour une utilisation à deux mains, dans lequel une première main (7) d'un opérateur actionne l'écran tactile (4) et une seconde main (8) de l'opérateur actionne l'élément de commande mécanique (5),
dans lequel le dispositif de commande (1) est conçu pour effectuer simultanément l'affectation des paramètres de fonction (3) sur l'écran tactile (4) avec la première main et le réglage, la commande et/ou la régulation des paramètres de fonction (3) sur l'élément de commande mécanique (5) avec la seconde main,
et dans lequel l'affectation du contrôle des paramètres de fonction (3) à l'élément de commande mécanique (5) n'est active que pendant la sélection des symboles (6a).

2. Dispositif de commande (1) selon la revendication précédente, **caractérisé en ce que** l'élément de commande mécanique (5) est réalisé sous la forme d'un régulateur mécanique, notamment d'un régulateur rotatif ou coulissant, pour régler, commander et/ou réguler les paramètres de fonction (3).

3. Console de mixage (M) pour applications audio comportant l'appareil de commande (1) selon l'une des revendications précédentes.
